**Europäisches Patentamt**

**European Patent Office**

**Office européen des brevets**

(19)

(11) Veröffentlichungsnummer: **0 019 110**
**B1**

(12) # EUROPÄISCHE PATENTSCHRIFT

(45) Veröffentlichungstag der Patentschrift:
**11.07.84**

(21) Anmeldenummer: **80102174.2**

(22) Anmeldetag: **23.04.80**

(51) Int. Cl.³: **A 01 D 69/04**, A 01 D 53/08,
H 02 G 11/04

(54) **Kabelhalter für Elektrorasenmäher.**

(30) Priorität: **09.05.79 DE 2918705**

(43) Veröffentlichungstag der Anmeldung:
**26.11.80 Patentblatt 80/24**

(45) Bekanntmachung des Hinweises auf die Patenterteilung:
**11.07.84 Patentblatt 84/28**

(84) Benannte Vertragsstaaten:
**AT BE CH FR LI NL**

(56) Entgegenhaltungen:
**EP - A - 0 003 549**
**CH - A - 254 221**
**DE - A - 1 954 341**
**DE - A - 2 118 146**
**DE - U - 1 816 947**
**GB - A - 17 387**
**US - A - 3 593 950**

(73) Patentinhaber: **Wolf-Geräte GmbH, Gregor-Wolf-Strasse**
**Postfach 860 und 880, D-5240 Betzdorf/Sieg (DE)**

(72) Erfinder: **Kolb, Walter, Martin-Luther-Strasse,**
**D-5240 Betzdorf (DE)**

(74) Vertreter: **Wallach, Curt, Dipl.-Ing. et al, Patentanwalte**
**Dipl.-Ing. Curt Wallach Dipl.-Ing. Gunther Koch,**
**Dipl.-Phys. Dr. Tino Halbach, Dipl.-Ing. R. Feldkamp**
**Postfach 920, D-8000 München 33 (DE)**

**Beschreibung**

Die Erfindung betrifft einen Kabelhalter zum Aufhängen des Endabschnitts eines den Motor eines Elektrorasenmähers speisenden Netzkabels am Führungsgriff oder einer mit dem Führungsgriff verbundenen Leitvorrichtung, mit einem drehbaren Aufhänger und zwei das Kabel über eine bestimmte Länge umschliessenden Schraubwendeln als Knickschutz.

Ein solcher Kabelhalter ist aus der DE-U-1 816 947 bekannt. Hierbei ist die von den Schraubwendeln gebildete Tülle entweder längsverschiebbar am Kabel befestigt oder auf nichtdargestellte Weise fixiert.

Ausgehend von diesem Stand der Technik liegt der Erfindung die Aufgabe zugrunde, zusätzlich zu dem Knickschutz eine wirksame Klemmvorrichtung zur Zugentlastung einzubauen, die leicht auch vom Nichtfachmann montiert und demontiert werden kann, ein Durchrutschen des Kabels auch bei hoher Zugbeanspruchung vermeidet und des weiteren den neuesten VDE-Vorschriften gerecht wird, gemäss welchen zusätzlich zur Funktion des Knickschutzes ein Schutz gegen axiale Verschiebung im Befestigungsteil auch bei ruckartiger Beanspruchung gewährleistet sein muss, wobei dieser Kabelhalter ausserdem noch einfach und billig herstellbar sein soll.

Gelöst wird die gestellte Aufgabe dadurch, dass die Schraubwendeln an einem den Aufhänger tragenden Oberteil eines zweiteiligen Gehäuses angeformt sind, dessen Unterteil deckelartig in das Oberteil einsetzbar und mit beidseitig eines im Oberteil eingeformten Kabelführungsraums verlaufenden Schrauben ans Oberteil fixierbar ist, dass das Oberteil in den Kabelführungsraum in Richtung des Unterteils ragende Klemmstege und zwei den Einführungsöffnungen benachbarte äussere Klemmwandabschnitte aufweist, und dass eine Klemmvorrichtung zur Zugentlastung vorgesehen ist, die von den Klemmstegen des Gehäuseoberteils einerseits und einem hiergegen verspannbaren mittleren Kabelauflageabschnitt des Gehäuseunterteils anderseits gebildet ist, wobei der mittlere Kabelauflageabschnitt gegenüber zwei äusseren, abgerundeten Kabelauflageabschnitten des Unterteils, die den äusseren Klemmwandabschnitten des Oberteils gegenüberliegen, zu den Klemmstegen hin versetzt ist, wodurch sich innerhalb des geschlossenen Gehäuses ein zweifach S-förmiger Kabelpfad ergibt.

Durch die Teilung des Gehäuses wird in Verbindung mit der an sich bekannten Schraubwendelanordnung erreicht, dass die Halterung an jeder Stelle des Kabels auf dieses aufgesetzt werden kann, ohne dass ein Einfädeln erforderlich wäre. Ein solcher Kabelhalter ist zwar durch die US-A-3 593 950 bekannt, jedoch kommt dieser bekannte Halter nicht der Forderung nach einer einwandfreien Zugbelastung nach und insbesondere würde dieser nicht den VDE-Vorschriften genügen. Der bekannte Kabelhalter besteht aus einer flexiblen Lasche, die um das Kabel geschlungen wird, wobei ein Ende der Lasche durch ein Loch gefädelt wird, welches im anderen Ende der Lasche vorgesehen ist. Bei einem straffen Anziehen der Lasche ergibt sich zwar ein gewundener Pfad, jedoch kann dieser ein sicheres Festhalten des Kabels nicht gewährleisten, und es ist zu befürchten, dass die Steckvorrichtung gelöst wird, wenn ein ruckartiger Zug am Kabel auftritt, was bei der Bedienung von Rasenmähern nicht vermeidbar ist, wenn sich das Kabel beispielsweise an irgendeiner Stelle eingeklemmt hat.

Es ist zwar ausserdem aus der DE-A-1 954 341 eine Vorrichtung bekannt, die eine Zugbelastung für Kabel bietet, wobei ein Oberteil und ein Unterteil vorgesehen sind, die mittels eines Schnappmechanismus verbindbar sind, wobei der Schnappmechanismus gleichzeitig eine Verformung der Leitung bewirkt. Eine solche Vorrichtung würde jedoch dem Sicherheitsbedürfnis zur Abfangung eines Netzkabels bei einem Rasenmäher nicht gerecht werden. Durch die auftretenden Belastungen würden unausbleiblich die elastisch federnden Arme abrutschen oder ausbrechen, so dass sich die Halterung vom Kabel lösen würde und dieses der Gefahr eines Anschnittes ausgesetzt würde.

Eine zweckmässige Ausgestaltung der Erfindung besteht darin, dass die Kabeleinführungsöffnungen von den abgerundet geformten äusseren Klemmwandabschnitten des Gehäuseoberteils und den äusseren, abgerundeten Kabelauflageabschnitten des Unterteils gebildet sind.

Nachstehend wird ein Ausführungsbeispiel der Erfindung anhand der Zeichnung beschrieben. In der Zeichnung zeigen:

Fig. 1 einen Vertikalschnitt des erfindungsgemässen Kabelhalters mit eingelegtem Netzkabel

Fig. 2 eine Ansicht des Kabelhalters

Fig. 3 einen Schnitt nach der Linie A—B gemäss Fig. 1.

Der Kabelhalter weist ein Gehäuse mit einem Oberteil 10 und einem Unterteil 12 auf, die gegeneinander verspannbar sind. Das Gehäuseoberteil 10 weist in den seitlichen Wandabschnitten 20 Gewindebohrungen 14 auf und zwischen diesen Wandabschnitten 20 ist ein Kabelführungsraum 18 belassen, durch den das Kabel 30 geführt ist. Ein Aufhänger 16 ist drehbar, aber axial gegen Herausziehen gesichert in der Deckelwand des Oberteils 10 gelagert. In die beiden Gewindelöcher 14 des oberen Gehäuseteils sind zwei Schrauben 22 einschraubbar, welche durch Führungslöcher des Gehäuseunterteils 12 gesteckt sind. Das untere Gehäuseteil weist eine der Querschnittsform des Kabels angepasste Trägermulde auf, die einen mittleren, nach oben versetzten Kabelauflageabschnitt 24 und seitliche, zur Gehäuseaussenwand abfallende Kabelauflageabschnitte 26 aufweist. Das Gehäuseoberteil 10 besitzt zwei beidseits der Schrauben 22 angeordnete, über die gesamte Breite verlaufende Klemmstege 25, die von oben her das auf dem Kabelauflageabschnitt 24 liegende Kabel klemmen. Auf diese Weise wird erreicht, dass der Kabelführungspfad an beiden Gehäuseteilen S-förmig gekrümmt ist, wodurch sich bei schonendster Behandlung des Kabels eine ein-

3       **0 019 110**       4

wandfreie Fixierung ergibt, wobei das Gehäuse-oberteil 10 mit abgerundeten Klemmwandab-schnitten 27 das Kabel über den seitlichen Kabelauflageabschnitten 26 der Trägermulde klemmt. Am Gehäuseoberteil sind beidseitig in die Wandungen Schraubenwendel 28 aus Kunststoff angespritzt, die das Kabel 30 umschliessen, dieses elastisch führen und damit als Knickschutz dienen.

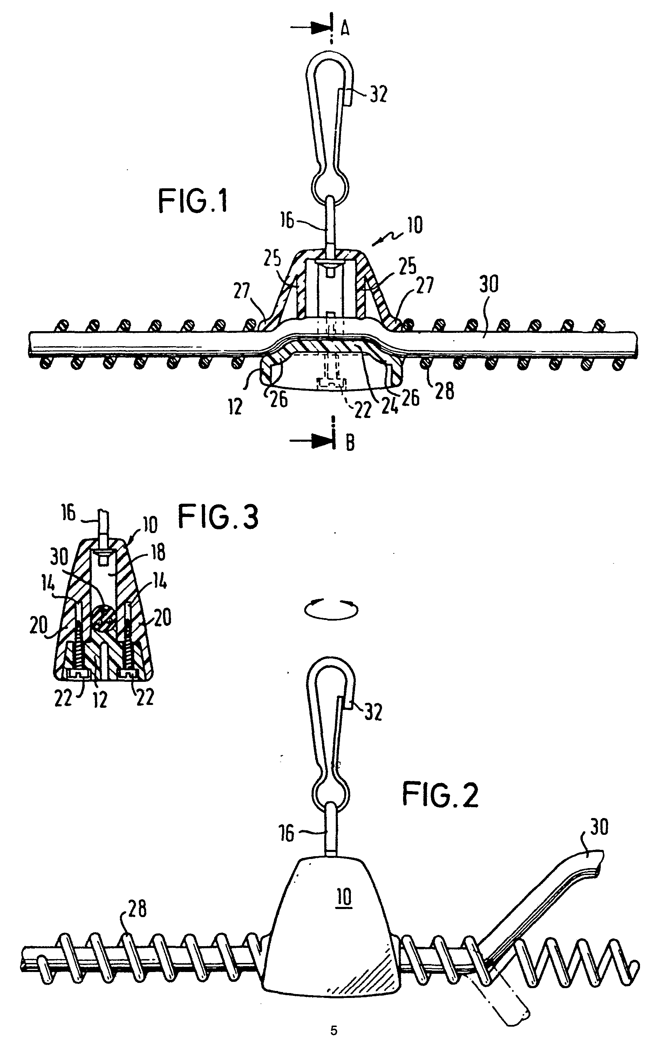

Ohne Abnahme der Anschlussstecker kann jedes Kabel 30 nach Abnahme des Unterteils 15 in das Oberteil in radialer Richtung eingelegt und durch Anziehen der Schrauben 22 zwischen Oberteil und Unterteil derart eingespannt werden, dass es innerhalb des Haltergehäuses den aus Fig. 1 ersichtlichen gewundenen Pfad annimmt. Das Kabel kann vor oder nach Verspannen der Gehäuseteile in die beiden Schraubenwendel 28 in der aus Fig. 2 ersichtlichen Weise eingelegt werden.

Der Aufhänger 16 wird von einem Karabinerhaken 32 getragen, der an geeigneter Stelle am Mähergriff oder einem Führungsrahmen eingehängt werden kann. Dadurch wird das Kabel gegen axiale Verschiebungen gesichert und die Knickschutzwendel sichern das Kabel gegen Abknicken und haltern es nach allen Seiten flexibel.

## Patentansprüche

1. Kabelhalter zum Aufhängen des Endabschnitts eines den Motor eines Elektrorasenmähers speisenden Netzkabels (30) am Führungsgriff oder einer mit dem Führungsgriff verbundenen Leitvorrichtung, mit einem drehbaren Aufhänger (16, 32) und zwei das Kabel (30) über eine bestimmte Länge umschliessenden Schraubwendeln (28) als Knickschutz, dadurch gekennzeichnet, dass die Schraubwendeln (28) an einem den Aufhänger (16, 32) tragenden Oberteil (10) eines zweiteiligen Gehäuses angeformt sind, dessen Unterteil (12) deckelartig in das Oberteil (10) einsetzbar und mit beidseitig eines im Oberteil (10) eingeformten Kabelführungsraums (18) verlaufenden Schrauben (22) an das Oberteil (10) fixierbar ist, dass das Oberteil (10) in den Kabelführungsraum (18) in Richtung des Unterteils (12) ragende Klemmstege (25) und zwei den Einführungsöffnungen benachbarte äussere Klemmwandabschnitte (27) aufweist und dass eine Klemmvorrichtung zur Zugentlastung vorgesehen ist, die von den Klemmstegen (25) des Gehäuseoberteils (10) einerseits und einem hiergegen verspannbaren mittleren Kabelauflageabschnitt (24) des Gehäuseunterteils (12) anderseits gebildet ist, wobei der mittlere Kabelauflageabschnitt (24) gegen-über zwei äusseren, abgerundeten Kabelauflage-abschnitten (26) des Unterteils (12), die den äusseren Klemmwandabschnitten (27) des Oberteils (10) gegenüberliegen, zu den Klemmstegen (25) hin versetzt ist, wodurch sich innerhalb des geschlossenen Gehäuses ein zweifach S-förmiger Kabelpfad ergibt.

2. Kabelhalter nach Anspruch 1, dadurch ge-kennzeichnet, dass die Kabeleinführungsöffnun-gen von den abgerundet geformten äusseren

Klemmwandabschnitten (27) des Gehäuseoberteils (10) und den äusseren, abgerundeten Kabelauflageabschnitten (26) des Unterteils (12) gebildet sind.

## Claims

1. A cable holder for suspending the end portion of a mains cable (30) feeding the motor of an electric lawnmower at the guide handle or at a guide device connected to the guide handle, the cable holder comprising a rotatable hanger (16, 32) and two helical coils (28) as an anti-kink protection which surround the cable over a specified length, characterised in that the helical coils (28) are formed on an upper part (10) of a two part housing, with the upper part (10) carrying the hanger (16, 32) and with the lower part (12) of the housing being insertable in lid-like manner into the upper part (10) and being securable to the upper part (10) by screws (22) which extend on both sides of a cable guide space (18) formed in the upper part (10); in that the upper part (10) has clamping webs (25) which project into the cable guide space (18) towards the lower part (10) and two outer clamping wall portions (27) adjacent the insertion openings; and in that a clamping device formed, on the one side, by the clamping webs (25) of the upper part (10) of the housing and, on the other side, by a central cable contacting section of the lower part (12) of the housing which can be urged towards the clamping webs, is provided for stress relief, wherein the central cable contacting section (24) is displaced towards the clamping webs (25) relative to two outer rounded cable contacting sections (26) of the lower part (12) which face the outer clamping wall portions (27) of the upper part (10), whereby a double S-shaped cable path results within the closed housing.

2. A cable holder in accordance with claim 1, characterised in that the cable insertion openings are formed by the rounded outer clamping wall portions (27) of the upper part (10) of the housing and by the outer, rounded, cable contacting sections (26) of the lower part (12).

## Revendications

1. Porte-câble pour la suspension, sur le manche ou sur le guidon fixé au manche, du tronçon terminal d'un câble de secteur alimentant le moteur d'une tondeuse à gazon électrique, ce porte-câble comprenant un émerillon pivotant (16, 32) et deux enroulements hélicoïdaux (28) qui entourent le câble (30) sur une certaine longueur et qui constituent une protection antiflambage, caractérisé en ce que les enroulements hélicoïdaux (28) sont joints de formage à une pièce supérieur (10) qui porte l'émerillon (16, 32) et appartient à une coquille en deux parties, dont la pièce inférieure (12) peut être insérée à la manière d'un couvercle dans la pièce supérieure (10) et peut être fixée à la pièce supérieure (10) à l'aide de vis (22) disposées de part et d'autre d'un espace de guidage (18) pour le câble, espace venu de formage dans la pièce supérieure (10) en ce que la pièce supérieure (10) présente des nervures de coincement (25) qui plongent dans l'espace de guidage (18) pour le câble en direction de la pièce inférieure (12), ainsi que deux segments de paroi de coincement extérieurs (27), voisins des ouvertures d'introduction, et en ce qu'il est prévu un dispositif de coincement pour le délestage en ce qui concerne la sollicitation à la traction, constitué par les nervures de coincement (25) de la pièce supérieure (10) d'une part et par un segment de support médian (24) pour le câble d'autre part, segment qui fait partie de la pièce inférieure (12) et qui peut être sollicité par une contrainte s'exerçant en direction de la pièce supérieure (10) de la coquille, la disposition étant telle que le segment de support médian (24) pour le câble est décalé en direction des nervures de coincement (25) par rapport à deux segments de support de câble extérieurs arrondis (26) de la pièce inférieure (12), opposés aux segments de coincement extérieurs (27) de la pièce supérieure (10), de sorte que l'on obtient, à l'intérieur de la coquille fermée, une configuration en double S du câble.

2. Porte-câble suivant la revendication 1, caractérisé en ce que les orifices pour l'introduction du câble sont constitués par les segments arrondis (27) des parois de coincement de la pièce supérieure (10) de la coquille et par les segments de support du câble extérieurs arrondis (26) de la pièce inférieure (12).

FIG.1

FIG.3

FIG.2